# EUROPEAN PATENT APPLICATION

(11) **EP 4 589 975 A1**
(43) Date of publication of application: **23.07.2025**
(21) Application number: 23880299.5
(22) Date of filing: 20.10.2023
(51) Int. Cl.: H04N 23/63, H04N 23/60, H04N 23/62, H04N 23/73, G01S 19/47

(54) **ELECTRONIC DEVICE AND METHOD FOR CAPTURING IMAGE OF CELESTIAL OBJECT**

(30) Priority: 21.10.2022 KR 20220136460; 02.12.2022 KR 20220166343
(71) Applicant: Samsung Electronics Co., Ltd., Suwon-si, Gyeonggi-do 16677 (KR)
(72) Inventor: LEE, Gyubong, Suwon-si Gyeonggi-do 16677 (KR); CHOE, Jihwan, Suwon-si Gyeonggi-do 16677 (KR)
(74) Representative: Gulde & Partner
(86) International application number: PCT/KR2023/016394
(87) International publication number: WO 2024/085724

(57) **Abstract**

An electronic device and a method for capturing an image of a celestial object are provided. The method for the electronic device to capture the image of a celestial object includes displaying a preview image generated through a camera of the electronic device; measuring a location of the electronic device; measuring an orientation of the electronic device; identifying a celestial object corresponding to a capturing direction of the camera of the electronic device, based on the measured location and the measured orientation; identifying an exposure time of the camera which is set to capture the celestial object; and displaying a graphical user interface (GUI) on the preview image to guide a reference location for displaying the celestial object within a captured result image of the celestial object, based on the exposure time.

## Description

### [Technical Field]

The disclosure relates to an electronic device and a method for capturing an image of a moving celestial object.

### [Background Art]

To provide a user with information related to a celestial object in the night sky, technology is developed to provide information of the celestial object (e.g., constellation information) located in a facing direction of an electronic device based on a location and an orientation of the electronic device. However, considerable resources and time are required to identify the celestial object in the facing direction of the electronic device, and accordingly, there is a problem that it is difficult for the electronic device to continuously provide the user with an exact location of the celestial object in real time. In addition, if the electronic device needs to capture the celestial object over a long exposure time, it is difficult to provide guidance to the user to allow the user to accurately capture a celestial object image in a desired composition of the user, because the celestial object moves during the exposure time. Further, as capturing the moving celestial object for the long exposure time, the captured result image is subject to deterioration.

### [DISCLOSURE OF INVENTION]

### [Solution to Problem]

A first aspect of the disclosure may provide a method for an electronic device to capture an image of a celestial object, which includes displaying a preview image generated through a camera of the electronic device; measuring a location of the electronic device using a global positioning system (GPS) sensor of the electronic device; measuring an orientation of the electronic device, using an inertial measurement unit (IMU) sensor of the electronic device; identifying a celestial object corresponding to a capturing direction of the camera of the electronic device, based on the measured location and the measured orientation; identifying an exposure time of the camera which is set to capture the celestial object; based on the exposure time, displaying a graphical user interface (GUI) on the preview image to guide a reference location for displaying the celestial object within a captured result image of the celestial object; receiving a user input for capturing the celestial object; and, upon receiving the user input, capturing the celestial object during the exposure time.

Also, a second aspect of the disclosure may provide an electronic device which includes a camera for capturing an image of the celestial object; a GPS sensor for measuring a location of the electronic device; an IMU sensor for measuring an orientation of the electronic device; a display; a memory for storing one or more instructions; and a processor for executing the one or more instructions, and the processor executes the one or more instructions, to display a preview image generated through the camera on the display, measure the location of the electronic device using the GPS sensor, measure the orientation of the electronic device, using the IMU sensor, based on the measured location and the measured orientation, identify a celestial object corresponding to the capture direction of the camera, identify an exposure time of the camera which is set to capture the celestial object, based on the exposure time, display a GUI on the preview image to guide a reference location for displaying the celestial object in a captured result image of the celestial object, receive a user input for capturing the celestial object, and, upon receiving the user input, capture the celestial object during the exposure time.

Also, a third aspect of the disclosure may provide a computer-readable recording medium for executing the method of the first aspect.

Also, a fourth aspect of the disclosure may provide a method for an electronic device to capture an image of a celestial object, which includes displaying a preview image generated through a camera of the electronic device; determining whether the electronic device is stationary; upon determining that the electronic device is stationary, identifying location coordinates of a virtual image of the celestial object on the preview image; identifying location coordinates of the celestial object in the preview image; correcting an orientation of the electronic device by comparing the location coordinates of the celestial object and the location coordinates of the virtual image of the celestial object; and displaying the preview image of the celestial object on the preview image based on the corrected orientation.

### [BRIEF DESCRIPTION OF DRAWINGS]

FIG. 1 is a diagram illustrating an overview of a process in which an electronic device captures an image of a celestial object and obtains a captured result image according to an embodiment.
FIG. 2 is a flowchart of a method for an electronic device to capture an image of a celestial object such that the celestial object is displayed at a reference location in a captured result image according to an embodiment.
FIG. 3 is a flowchart of a method for an electronic device to guide a celestial object to be displayed at a reference location within a captured result image according to an embodiment.
FIG. 4 is a diagram illustrating an example of a celestial object which moves during image capturing according to an embodiment.
FIG. 5 is a diagram illustrating an example of a preview image for guiding a user, to display a celestial object at a reference location in a captured result image according to an embodiment.
FIG. 6 is a diagram illustrating an example of a preview image for guiding a user, to display a celestial object at a reference location in a captured result image according to an embodiment.
FIG. 7 is a flowchart of a method for an electronic device to generate a captured result image by combining a plurality of captured image frames according to an embodiment.
FIG. 8 is a diagram illustrating a plurality of captured image frames generated by an electronic device by capturing an image of a celestial object during an exposure time according to an embodiment.
FIG. 9 is a diagram illustrating an example of arranging a plurality of captured image frames, such that a celestial object is located at a reference location within a captured result image according to an embodiment.
FIG. 10 is a diagram illustrating a captured result image displaying a celestial object at a reference location according to an embodiment.
FIG. 11 is a flowchart of a method for an electronic device to correct an orientation of the electronic device and to display a virtual image of a celestial object on a preview image based on the corrected orientation according to an embodiment.
FIG. 12 is a diagram illustrating preview images displayed on a screen of an electronic device to capture a celestial object according to an embodiment.
FIG. 13 is a block diagram of an electronic device according to an embodiment.
FIG. 14 is a block diagram of an electronic device in a network environment, according to various embodiments.

### [MODE FOR THE INVENTION]

Hereinafter, an embodiment of the disclosure will be described in detail with reference to the accompanying drawings to enable one of ordinary skill in the art to easily embody and practice the disclosure. However, the disclosure may be implemented in various forms and is not limited to the embodiment described herein. Parts unrelated to the detailed description are omitted in the drawings to ensure clarity of the disclosure, and similar parts are given similar reference numerals throughout the specification.

Terms used in the disclosure are general terms currently widely used in consideration of functions in the disclosure, and may indicate various terms according to the intention of one of ordinary skill in the art, precedents, or new technology in the art. Accordingly, the terms used in the disclosure should not be interpreted only based on names of the terms, but should be interpreted based on meanings of the terms and the whole context of the disclosure.

Also, although terms such as 'first' and 'second' may be used herein to describe various elements, these elements should not be limited by these terms. These terms are only used to distinguish one element from another.

Throughout the specification, when an element is referred to as being "connected" to another element, it may be "directly connected" to the other element or "electrically connected" to the other element with intervening elements therebetween. In addition, when a part "includes" an element, unless otherwise disclosed, the part may further include other element, not excluding the other element.

A phrase "in an embodiment" shown in various parts of the specification does not necessarily indicate the same embodiment.

An embodiment of the disclosure may be represented with functional block components and various processing steps. Some or all of such functional blocks may be realized by various hardware and/or software components configured to perform specified functions. For example, the functional blocks of the disclosure may be realized by one or more microprocessors, or by circuit components for a specific function. In addition, for example, the functional blocks of the disclosure may be implemented with various programming or scripting languages. The functional blocks may be implemented in algorithms executed on one or more processors. Further, the disclosure may employ conventional technologies for electronic environment setting, signal processing, and/or data processing. Terms such as "mechanism," "element," "means," and "configuration" may be used broadly, and are not limited to mechanical or physical configurations.

In addition, connection lines or connection members between components shown in the drawings merely exemplify functional connections and/or physical or circuit connections. In an actual device, connections between components may be represented by various replaceable or additional functional connections, physical connections, or circuit connections.

According to an embodiment of the disclosure, a method for an electronic device to capture an image of a celestial object may include displaying a preview image generated through a camera of the electronic device; measuring a location of the electronic device using a global positioning system (GPS) sensor of the electronic device; measuring an orientation of the electronic device, using an inertial measurement unit (IMU) sensor of the electronic device; identifying a celestial object corresponding to a capturing direction of the camera of the electronic device, based on the measured location and the measured orientation; identifying an exposure time of the camera which is set to capture the celestial object; and displaying a graphical user interface (GUI) on the preview image to guide a reference location for displaying the celestial object within a captured result image of the celestial object, based on the exposure time. In addition, the method may include receiving a user input for capturing the celestial object; and, upon receiving the user input, capturing the celestial object during the exposure time.

In addition, the method may include acquiring a plurality of captured image frames, by capturing the celestial object during the exposure time; and generating the captured result image, by combining the plurality of captured image frames.

In addition, as the celestial object moves during the exposure time, locations of the celestial object in the plurality of captured image frames may be different from each other, and generating the captured result image may include combining the plurality of captured image frames, such that the celestial objects in the plurality of captured image frames superimpose, at the reference location for displaying the celestial object in the captured result image.

In addition, the reference location for displaying the celestial object in the captured result image may be determined based on the exposure time, a capture start location of the celestial object and a capture end location of the celestial object, to prevent deterioration around the location of the celestial object in the captured result image.

In addition, the method may further include determining that the electronic device is stationary; as the electronic device is stationary: identifying coordinates for displaying a virtual image of the celestial object in the preview image; comparing location coordinates of the celestial object in the preview image with the coordinates for displaying the virtual image; and correcting a sensing value of the IMU sensor of the electronic device, based on the comparison result.

In addition, determining that the electronic device is stationary may determine whether shaking of the electronic device falls within a preset threshold range, using the IMU sensor.

In addition, the method may further include correcting the coordinates for displaying the virtual image, based on correcting the sensing value of the IMU sensor of the electronic device; and displaying the virtual image of the celestial object at a location corresponding to the corrected coordinates on the preview image.

In addition, the method may further include determining that the capture direction of the electronic device is changed; and, as the capture direction of the electronic device changes, recorrecting the sensing value of the IMU sensor of the electronic device and the corrected coordinates.

In addition, determining that the capture direction is changed may determine whether the capture direction of the electronic device deviates from a preset threshold.

In addition, identifying the celestial object may identify the celestial object corresponding to the capture direction of the camera of the electronic device, from a database (DB) which stores celestial object information corresponding to the measured location and the measured orientation.

In addition, according to an embodiment, an electronic device for capturing an image of a celestial object may include a camera for capturing an image of the celestial object; a GPS sensor for measuring a location of the electronic device; an IMU sensor for measuring an orientation of the electronic device; a display; memory for storing one or more instructions; and a processor for executing the one or more instructions, and the processor may execute the one or more instructions, to display a preview image generated through the camera on the display, measure the location of the electronic device using the GPS sensor, measure the orientation of the electronic device, using the IMU sensor, based on the measured location and the measured orientation, identify a celestial object corresponding to the capture direction of the camera, identify an exposure time of the camera which is set to capture the celestial object, and, based on the exposure time, display a GUI on the preview image to guide a reference location for displaying the celestial object in a captured result image of the celestial object.

In addition, the processor may execute the one or more instructions, to receive a user input for capturing the celestial object, and, upon receiving the user input, capture the celestial object during the exposure time.

In addition, the processor may execute the one or more instructions, to obtain a plurality of captured image frames, by capturing the celestial object during the exposure time, and generate the captured result image, by combining the plurality of captured image frames.

In addition, as the celestial object moves during the exposure time, locations of the celestial object in the plurality of captured image frames may be different from each other, and the processor may execute the one or more instructions to combine the plurality of captured image frames, such that the celestial objects in the plurality of captured image frames superimpose, at the reference location for displaying the celestial object in the captured result image.

In addition, the reference location for displaying the celestial object in the captured result image may be determined based on the exposure time, a capture start location of the celestial object and a capture end location of the celestial object, to prevent deterioration around the location of the celestial object in the captured result image.

In addition, the processor may execute the one or more instructions, to determine that the electronic device is stationary, as the electronic device is stationary, identify coordinates for displaying the virtual image of the celestial object in the preview image, and compare location coordinates of the celestial object in the preview image with the coordinates for displaying the virtual image, and correct a sensing value of the IMU sensor of the electronic device, based on the comparison result.

In addition, the processor may execute the one or more instructions, to determine that the electronic device is stationary, and determine whether shaking of the electronic device falls within a preset threshold range, using the IMU sensor.

In addition, the processor may execute the one or more instructions, to correct the coordinates for displaying the virtual image, based on correcting the sensing value of the IMU sensor of the electronic device, and to display the virtual image of the celestial object at a location corresponding to the corrected coordinates on the preview image.

In addition, the processor may execute the one or more instructions, to determine that the capture direction of the electronic device is changed, and as the capture direction of the electronic device changes, recorrect the sensing value of the IMU sensor of the electronic device and the corrected coordinates.

In addition, the processor may execute the one or more instructions, to determine that the capture direction is changed, and determine whether the capture direction of the electronic device deviates from a preset threshold.

In addition, according to an embodiment, a computer-readable recording medium for recording a program to execute a method for an electronic device to capture an image of a celestial object may be provided, the method including displaying a preview image generated through a camera of the electronic device; measuring a location of the electronic device using a GPS sensor of the electronic device; measuring an orientation of the electronic device, using an IMU sensor of the electronic device; identifying a celestial object corresponding to a capturing direction of the camera of the electronic device, based on the measured location and the measured orientation; identifying an exposure time of the camera which is set to capture the celestial object; and displaying a GUI on the preview image to guide a reference location for displaying the celestial object within a captured result image of the celestial object, based on the exposure time. In addition, the method may include receiving a user input for capturing the celestial object; and, upon receiving the user input, capturing the celestial object during the exposure time.

In this document, a celestial object is an object which exists in space, and may be an object which is captured by a camera of an electronic device. The celestial object may include, for example, a star, a planet, a satellite, a comet, a star cluster, a nebula and/or interstellar material. The celestial object may include, for example, stars which form a constellation.

In addition, a captured result image of the celestial object may be an image stored in an electronic device or another device, as a result generated by an electronic device by capturing the celestial object.

In addition, the celestial object image on a preview image may be an image of the actual celestial object displayed within the preview image displayed on a screen of the electronic device to capture the celestial object. If a brightness of the celestial object is dark, the celestial object image displayed in the preview image may not be identified by a user.

In addition, a virtual image of the celestial object on the preview image may be a virtual image displayed to indicate a location of the actual celestial object on the preview image. The virtual image of the celestial object may be displayed by overlapping on the preview image separately from the actual celestial object. The virtual image of the celestial object may be created based on celestial information of the actual celestial object, and may be virtually generated to allow the user who captures the image of the actual celestial object to identify the current location of the actual celestial object on the preview image.

In addition, a guide image of the celestial object on the preview may be a virtual image provided to guide composition for capturing the celestial object to the user who captures the image of the celestial object. For example, the guide image of the celestial object may be generated to guide the user to the location of the celestial object in the captured result image, but is not limited thereto.

Hereinafter, the disclosure is described in detail with reference to the attached drawings.

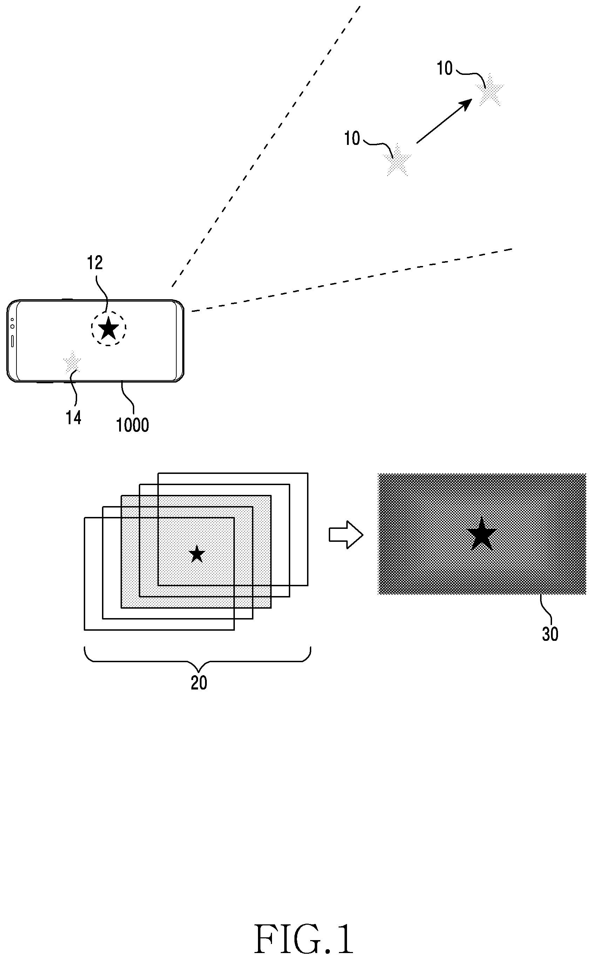

FIG. 1 is a diagram illustrating an overview of a process in which an electronic device captures an image of a celestial object and obtains a captured result image according to an embodiment.

Referring to FIG. 1, an electronic device 1000 may capture a celestial object 10 in the sky. If the celestial object 10 in the sky is not bright enough, the electronic device 1000 may capture the celestial object 10 for a specific exposure time, and the location of the celestial object 10 may move in the sky while the electronic device 1000 captures the celestial object 10, due to the rotation of the Earth.

According to an embodiment, the electronic device 1000 may display a GUI 12 for guiding the user on a preview image, such that the celestial object 10 is positioned at a specific location within a captured result image 30 of the moving celestial object 10. The electronic device 1000 may display the GUI 12 at a location spaced apart from a celestial object image 14 of the celestial object 10 on the preview image, by considering a movement trajectory of the celestial object 10 during the exposure time. Also, if the celestial object 10 is not bright enough, the celestial object image 14 on the preview image may not be clearly visible to the user, and, in this case, the electronic device 1000 may display a virtual image of the celestial object 10 on the preview.

According to an embodiment, the electronic device 1000 may acquire a plurality of captured image frames 20 by capturing the celestial object 10 during the exposure time. The electronic device 1000 may generate the captured result image 30 by combining the plurality of captured image frames 20 such that each celestial object image in the plurality of captured image frames 20 is placed at the specific location in the captured result image 30.

According to an embodiment, the electronic device 1000 may include, but not limited to, a smartphone, a tablet personal computer (PC), a PC, a smart TV, a mobile phone, a personal digital assistant (PDA), a laptop, a media player, a GPS device, an e-book reader, a digital broadcasting terminal, navigation, a kiosk, an MP3 player, a digital camera, home appliance, and other mobile or non-mobile computing device. In addition, the electronic device 1000 may be a wearable device such as a watch, glasses, a hair band and a ring equipped with a data processing function. However, it is not limited thereto, and the electronic device 1000 may include all types of devices which provide an image capturing function using a camera.

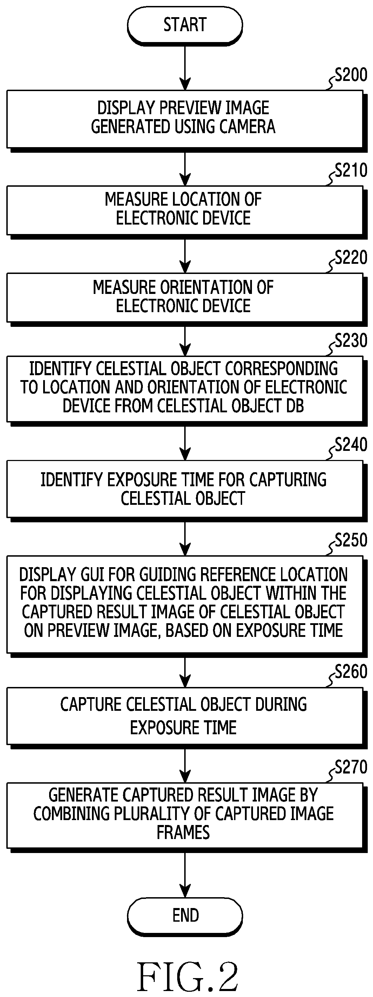

FIG. 2 is a flowchart of a method for an electronic device to capture an image of a celestial object such that the celestial object is displayed at a reference location in a captured result image according to an embodiment.

In the following embodiments, operations may be performed sequentially, but is not necessarily performed in sequence. For example, the order of the operations may be changed, and at least two operations may be performed in parallel.

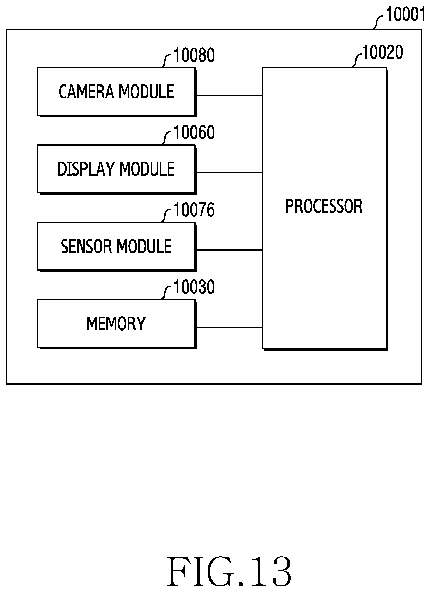

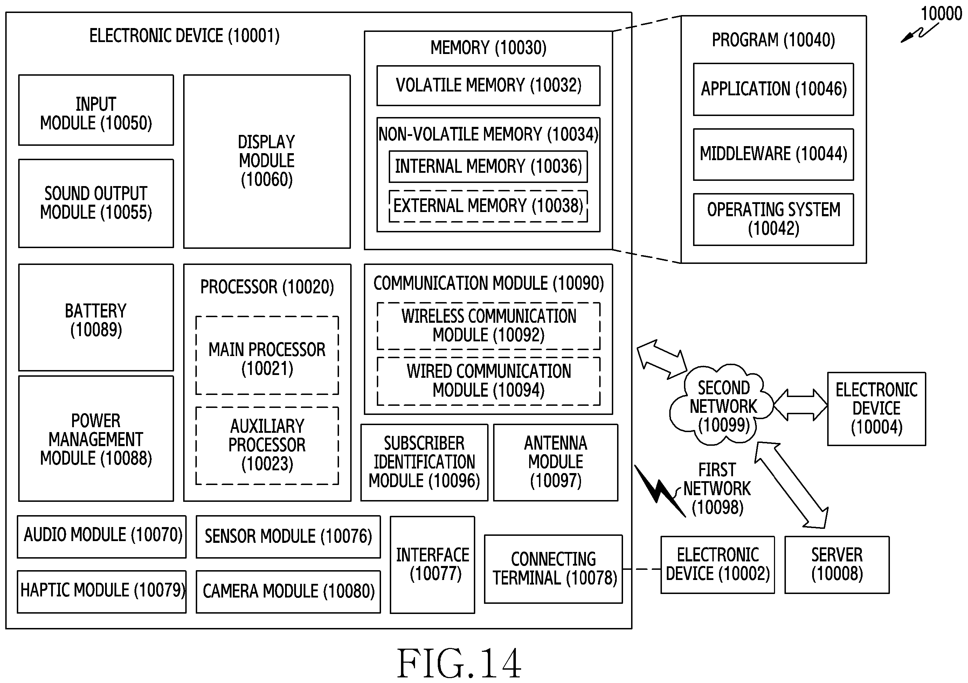

According to an embodiment, it may be understood that operations S200 through S270 are performed in a processor (e.g., a processor 10020 of FIG. 13 and/or FIG. 14) of the electronic device (e.g., the electronic device 1000 of FIG. 1, an electronic device 10001 of FIG. 13 and/or FIG. 14).

According to an embodiment, the electronic device 1000 (e.g., the electronic device 10001 of FIG. 13 and/or FIG. 14) may display a preview image generated through a camera (e.g., a camera module 10080 of FIG. 13 and/or 14) in operation S200. As an image capturing function of the electronic device 1000 is activated, the electronic device 1000 may capture an image of a celestial object using the camera, and display the preview image including the celestial object image on a display (e.g., a display module 10060 of FIG. 13 and/or 14) of the electronic device 1000. For example, as a camera application of the electronic device 1000 is executed and the function of capturing a celestial object is activated, the electronic device 1000 may display the preview image including the celestial object image on the screen of the electronic device 1000.

According to an embodiment, the celestial object image on the preview image may be an image of the actual celestial object presented within the preview image displayed on the screen of the electronic device to capture the image of the celestial object. If the brightness of the celestial object is dark, the celestial object image displayed in the preview image may not be identified by the user.

According to an embodiment, the electronic device 1000 may measure a location of the electronic device 1000 in operation S210. The electronic device 1000 may measure the location of the electronic device 1000 using a sensor module (e.g., a sensor module 10076 of FIG. 13 and/or 14) of the electronic device 1000. As the camera application of the electronic device 1000 is executed and the function for capturing the celestial object is activated, the electronic device 1000 may obtain location information of the electronic device 1000. For example, the electronic device 1000 may measure the location of the electronic device 1000 using a GPS sensor, and obtain information related to latitude and longitude of the electronic device 1000. The location of the electronic device 1000 may be used to identify the location of the celestial object captured by the electronic device 1000 from a celestial object database (DB) to be described.

According to an embodiment, the electronic device 1000 may measure an orientation of the electronic device 1000 in operation S220. As the camera application of the electronic device 1000 is executed and the function for capturing the celestial object is activated, the electronic device 1000 may obtain orientation information of the electronic device 1000 using the sensor module (e.g., the sensor module 10076 of FIG. 13 and/or 14) of the electronic device 1000. For example, the electronic device 1000 may measure the orientation of the electronic device 1000 using an IMU sensor. For example, the IMU sensor may include, but not limited to, at least one of a geomagnetic sensor, an acceleration sensor or a gyro sensor. For example, the IMU sensor may include only a geomagnetic sensor and an acceleration sensor. For example, the electronic device 1000 may acquire information of three-axis information based on a geomagnetic direction using the geomagnetic sensor. For example, the electronic device 1000 may obtain three-axis information based on the direction of gravity using the acceleration sensor.

According to an embodiment, the orientation of the electronic device 1000 may be used to identify an image capturing direction of the electronic device 1000, and may be used to identify the location of the celestial object captured by the electronic device 1000 from the celestial object DB to be described.

According to an embodiment, the electronic device 1000 may identify a celestial object corresponding to the location and the orientation of the electronic device 1000 from the celestial object DB in operation S230. The celestial object DB may store information related to celestial objects located in the image capturing direction of the electronic device 1000, according to the location and the orientation of the electronic device 1000 at a specific time. For example, the celestial object DB may include information related to location information of the celestial object and identification information of the celestial object, but is not limited thereto. For example, the information related to the location of the celestial object may include information related to azimuth and altitude of the celestial object. For example, the identification information of the celestial object may include information related to a name of the celestial object, a shape of the celestial object, a size of the celestial object and a color of the celestial object.

According to an embodiment, the electronic device 1000 may identify the image capturing direction of the camera of the electronic device 1000 based on the orientation information of the electronic device 1000. The electronic device 1000 may identify a current time at which the celestial object is captured, and identify information related to the celestial object captured by the electronic device 1000 from the celestial object DB, based on the current time, the location of the electronic device 1000, and the image capturing direction of the electronic device 1000. For example, the electronic device 1000 may obtain information related to right ascension, declination, an angle of view, and rotation of a portion currently faced by the camera of the electronic device 1000, based on the location information measured using the GPS sensor, the orientation information measured using the IMU sensor, and camera information. In addition, for example, the electronic device 1000 may identify the information related to the celestial object captured by the electronic device 1000 from the celestial object DB using plate solving technology.

According to an embodiment, the electronic device 1000 may identify the exposure time for capturing the celestial object in operation S240. If the brightness of the celestial object is not high enough, the celestial object image on the preview image may not be identified by the user, and the electronic device 1000 may capture the celestial object for a specific exposure time such that the celestial object in the captured result image may be identified by the user. For example, the exposure time for capturing the celestial object may be preset to a default value for capturing the celestial object. Alternatively, for example, the exposure time for capturing the celestial object may be set to a specific value according to a user input as the function for capturing the celestial object is activated. Alternatively, for example, the exposure time for capturing the celestial object may be set automatically based on the brightness of the celestial object in the preview image.

According to an embodiment, in operation S250, the electronic device 1000 may display on the preview image a GUI for guiding a reference location for displaying the celestial object within the captured result image of the celestial object, based on the exposure time. The electronic device 1000 may calculate a movement trajectory of the celestial object to be captured at the location of the electronic device 1000, based on the exposure time. The electronic device 1000 may calculate a movement direction and a movement distance of the celestial object during the exposure time, based on the latitude and the longitude of the location of the electronic device 1000.

According to an embodiment, the electronic device 1000 may identify a capture start location of the celestial object on the preview image, and identify a capture end location of the celestial object on the preview image, based on the capture start location and the movement trajectory of the celestial object.

According to an embodiment, the electronic device 1000 may determine a specific location between the capture start location and the capture end location on the preview image as the reference location. In addition, the electronic device 1000 may display on the preview image a GUI for guiding the user that the celestial object is to be displayed at a location corresponding to the reference location on the preview image within the captured result image. For example, the capture start location and the capture end location on the preview image may be located near a boundary of the preview image, and the GUI for guiding the reference location to display the celestial object within the captured result image of the celestial object may be located in a center portion of the preview image.

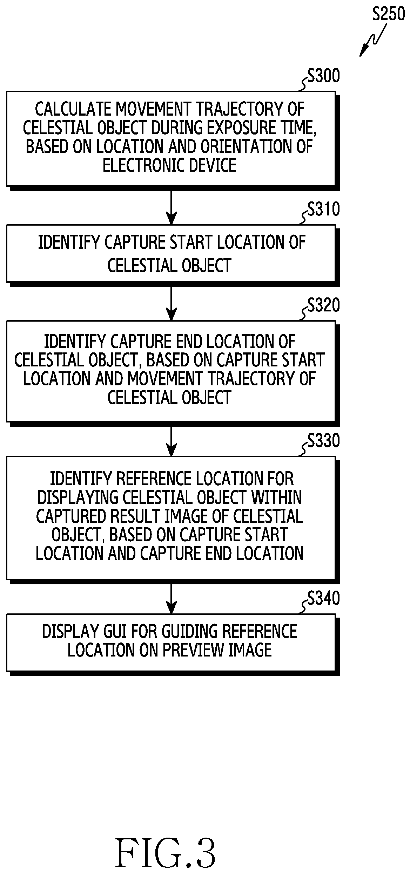

The GUI for guiding the user shall be described in more detail in FIG. 3, FIG. 5 and FIG. 6.

According to an embodiment, the electronic device 1000 may capture the image of the celestial object during the exposure time in operation S260. The electronic device 1000 may acquire a plurality of captured image frames by capturing the celestial object during the exposure time. The plurality of captured image frames each may include the image of the celestial object. As the celestial object moves during the exposure time, each celestial object image in the plurality of captured image frames may be displayed at different locations.

According to an embodiment, the electronic device 1000 may generate the captured result image by combining the plurality of captured image frames in operation S270. The electronic device 1000 may superimpose the plurality of captured frames such that the celestial object images within the plurality of captured frames are located at the reference location within the captured result image. In addition, the electronic device 1000 may generate the captured result image by combining the plurality of superimposed captured images.

According to an embodiment, the electronic device 1000 may identify the location of the celestial object from each of the plurality of captured frames, arrange the plurality of captured frames such that the celestial object is located at the reference location in the captured result image, and thus generate the captured result image.

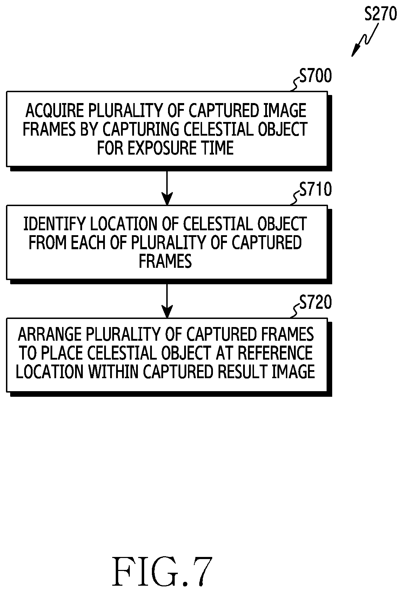

A method of the electronic device 1000 for generating a captured result image from a plurality of captured image frames will be described in more detail in FIG. 7 through FIG. 10.

FIG. 3 is a flowchart of a method for an electronic device to guide a celestial object to be displayed at a reference location within a captured result image according to an embodiment. Operations of FIG. 3 may correspond to operation S250 of FIG. 2, but are not limited thereto.

In the following embodiments, operations may be performed sequentially, but is not necessarily performed in sequence. For example, the order of the operations may be changed, and at least two operations may be performed in parallel.

According to an embodiment, it may be understood that operations S300 through S340 are performed at a processor (e.g., the processor 10020 of FIG. 13 and/or FIG. 14) of the electronic device (e.g., the electronic device 1000 of FIG. 1, the electronic device 10001 of FIG. 13 and/or FIG. 14).

According to an embodiment, in operation S300, the electronic device 1000 may calculate the movement trajectory of the celestial object during the exposure time, based on the location and the orientation of the electronic device 1000. The electronic device 1000 may calculate the movement trajectory of the celestial object to be captured at the location of the electronic device 1000, based on the exposure time. The electronic device 1000 may calculate the movement direction and the movement distance of the celestial object during the exposure time, based on the latitude and the longitude of the location of the electronic device 1000. The electronic device 1000 may prestore information related to the movement trajectory of the celestial object according to the location on the Earth, and calculate the movement trajectory of the celestial object during the exposure time, based on the stored information and the location of the electronic device 1000.

According to an embodiment, the electronic device 1000 may identify the capture start location of the celestial object in operation S310. The electronic device 1000 may identify the current location of the celestial object on the preview image as the capture start location. The electronic device 1000 may identify the celestial object image currently displayed in the preview image, and determine the location displaying the identified celestial object image on the preview image as the capture start location of the celestial object.

According to an embodiment, in operation S320, the electronic device 1000 may identify the capture end location of the celestial object, based on the capture start location and the movement trajectory of the celestial object. For example, the electronic device 1000 may calculate the capture end location of the celestial object by using coordinate values of the capture start location of the celestial object and coordinate values of the movement trajectory.

According to an embodiment, in operation S330, the electronic device 1000 may identify the reference location for displaying the celestial object within the captured result image of the celestial object, based on the capture start location and the capture end location. For example, if the capture start location and the capture end location are positioned at the edge of the captured result image, the electronic device 1000 may determine the center portion of the captured result image as the reference location for displaying the celestial object. For example, if the exposure time for capturing the celestial object is about 5 minutes, the electronic device 1000 may determine as the reference location a location displaying the celestial object corresponding to about 2 minutes and 30 seconds in the captured image frame among the captured image frames to be generated by capturing the celestial object for about 5 minutes.

According to an embodiment, the electronic device 1000 may display the GUI guiding the reference location on the preview image in operation S340. The GUI guiding the user to the reference location may include information indicating that the celestial object is displayed at the reference location in the captured result image. For example, the GUI may a text such as "The celestial object is displayed here in the captured image." or "If you place the celestial object to be captured here, the celestial object will be centered within the captured image." For example, the GUI may include an object indicating the location on the preview image corresponding to the location of the celestial object in the capture result image. For example, the GUI may include a guide image of the celestial object displayed at a location on the preview image corresponding to the location of the celestial object in the captured result image.

According to an embodiment, the guide image of the celestial object may be a virtual image provided to composition for capturing the celestial object to the user who captures the image of the celestial object. For example, the celestial object guide image may be generated to guide the user to the location of the celestial object in the captured result image, but is not limited to thereto.

According to an embodiment, if capturing the celestial object for a specific exposure time, the user may, through the GUI, identify the reference location for displaying the celestial object in the captured result image, and thus capture the celestial object in his/her desired composition.

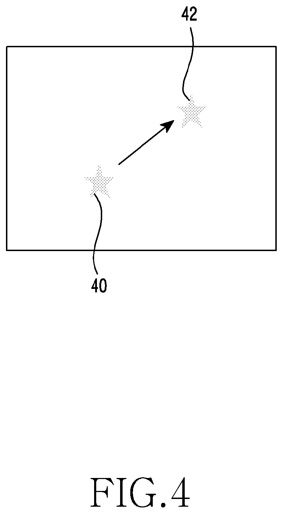

FIG. 4 is a diagram illustrating an example of a celestial object which moves during image capturing according to an embodiment.

Referring to FIG. 4, in an embodiment, if the electronic device 1000 captures a celestial object for a specific exposure time due to the rotation of the Earth, the celestial object may move from a first location 40 to a second location 42 on the celestial sphere due to the rotation of the Earth. Hence, the location displaying the celestial object may differ within a plurality of celestial object image frames generated by capturing the celestial object during the exposure time.

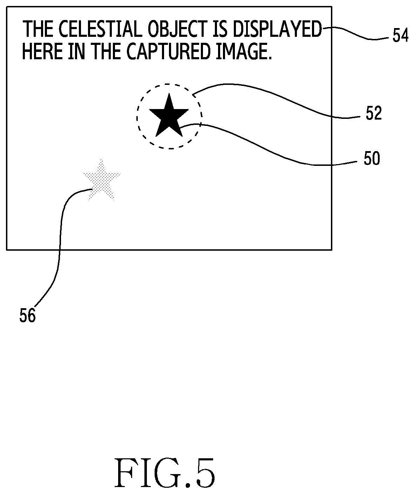

FIG. 5 is a diagram illustrating an example of a preview image for guiding a user, to display a celestial object at a reference location in a captured result image according to an embodiment.

Referring to FIG. 5, in an embodiment, a guide image 50 of a celestial object and an object 52 for guiding a reference location may be displayed at the reference location determined based on the capture start location and the capture end location. In addition, a text 54 of "The celestial object is displayed here in the captured image." may be displayed on the preview image. A celestial object image 56 currently captured may indicate the capture start location, and the guide image 50 of the celestial object may be located on a movement trajectory between the capture start location and the capture end location of the celestial object. Hence, the user may start the image capturing by placing the guide image 50 and the object 52 of the celestial object at his/her desired location on the preview image, to thus display the celestial object at the desired location of the user within the captured result image generated by the electronic device 1000.

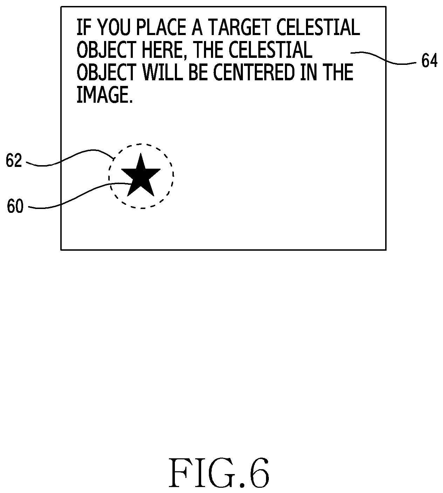

FIG. 6 is a diagram illustrating an example of a preview image for guiding a user, to display a celestial object at a reference location in a captured result image, according to an embodiment.

Referring to FIG. 6, in an embodiment, a text guiding that a celestial object is displayed at a location on a captured result image corresponding to a reference location determined based on the capture start location and the capture end location may be displayed. For example, a text 64 such as "If you place a target celestial object here, it will be centered in the image." may be displayed on the preview image. In addition, an object 62 for guiding the location of the celestial object to be captured to a specific location and a guide image 60 of the celestial object may be displayed on the preview image. Hence, the user may start the image capturing by placing the celestial object at the location of the guide image 60 of the celestial object and the object 62, to thus display the celestial object at the reference location within the captured result image generated by the electronic device 1000.

FIG. 7 is a flowchart of a method for an electronic device to generate a captured result image by combining a plurality of captured image frames according to an embodiment. Operations of FIG. 7 may correspond to operation S270 of FIG. 2, but are not limited thereto.

In the following embodiments, operations may be performed sequentially, but is not necessarily performed in sequence. For example, the order of the operations may be changed, and at least two operations may be performed in parallel.

According to an embodiment, it may be understood that operations S700 through S720 are performed at the processor (e.g., the processor 10020 of FIG. 13 and/or FIG. 14) of the electronic device (e.g., the electronic device 1000 of FIG. 1, the electronic device 10001 of FIG. 13 and/or FIG. 14).

According to an embodiment, the electronic device 1000 may acquire a plurality of captured image frames by capturing a celestial object for an exposure time in operation S700. The celestial object image may be displayed within each of the plurality of captured image frames.

According to an embodiment, the electronic device 1000 may identify the location of the celestial object from each of the plurality of captured frames in operation S710. If the electronic device 1000 captures the celestial object during the exposure time, the celestial object may move on the celestial sphere, and the location displaying the celestial object may differ within the plurality of celestial object image frames generated by capturing the celestial object during the exposure time.

According to an embodiment, in operation S720, the electronic device 1000 may arrange the plurality of captured frames to place the celestial object at the reference location within the captured result image.

According to an embodiment, the electronic device 1000 may determine a center portion of the movement trajectory of the celestial object as the reference location for displaying the celestial object, to reduce deterioration of the portion including the celestial object in the captured result image. In this case, the electronic device 1000 may select as a reference frame the captured image frame in which the celestial object is displayed in the center portion of the movement trajectory among the captured image frames, and superimpose the plurality of captured image frames, such that the celestial object in the selected reference frame and the celestial object in other captured image frames are overlaid.

For example, if the exposure time for capturing the celestial object is about 5 minutes, the electronic device 1000 may select as the reference frame the captured image frame corresponding to about 2 minutes and 30 seconds among the captured image frames generated by capturing the celestial object for about 5 minutes. In addition, the plurality of captured image frames may be superimposed and arranged, such that the celestial object included in the reference frame overlaps the celestial object in other captured image frames. The electronic device 1000 may generate the captured result image by combining the plurality of the arranged captured image frames.

Alternatively, according to an embodiment, the electronic device 1000 may determine the center portion of the captured result image as the reference location for displaying the celestial object. In this case, the electronic device 1000 may select as the reference frame the captured image frame in which the celestial object is displayed in the center portion of the captured image frame among the captured image frames, and superimpose the plurality of captured image frames such that the celestial object in the selected reference frame and the celestial object in other captured image frames are overlaid.

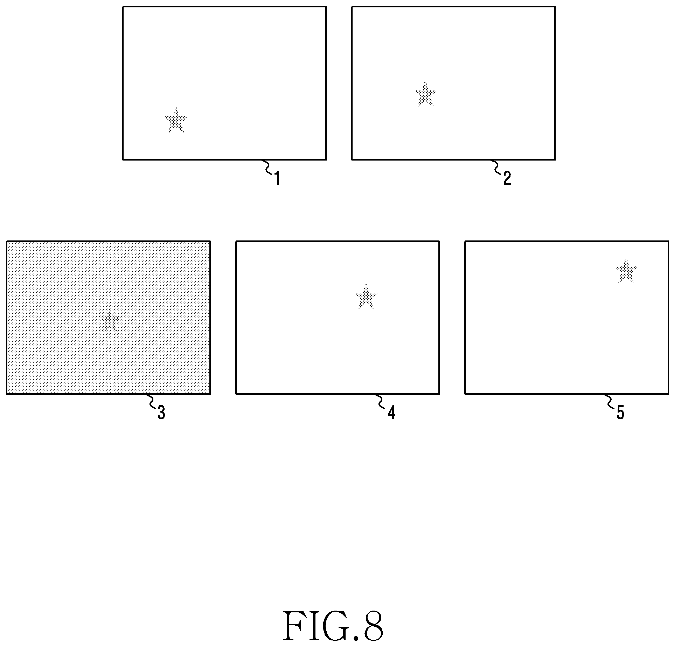

FIG. 8 is a diagram illustrating a plurality of captured image frames generated by an electronic device by capturing a celestial object during an exposure time according to an embodiment.

Referring to FIG. 8, in an embodiment, the electronic device 1000 may generate a plurality of captured image frames 1, 2, 3, 4, and 5 by capturing the celestial object during the exposure time. Since the celestial object is captured while it is moving on the celestial sphere, locations of each celestial object may be different from each other in the plurality of captured image frames 1, 2, 3, 4, and 5. For example, the celestial object location in the first captured image frame 1, the celestial object location in the second captured image frame 2, the celestial object location in the third captured image frame 3, and the celestial object location in the fourth captured image frame 4 and the celestial object location in the fifth captured image frame 5 may differ from each other. The electronic device 1000 may select the third captured image frame 3 in which the celestial object is located in the center portion of the movement trajectory of the celestial object, as a reference frame.

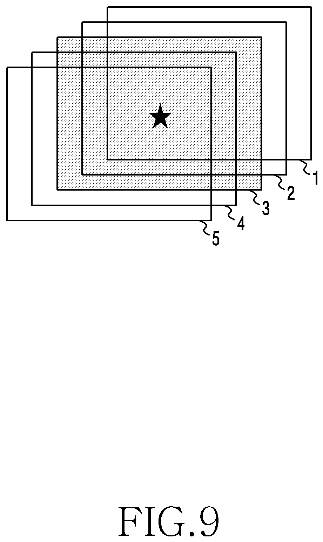

FIG. 9 is a diagram illustrating an example of arranging a plurality of captured image frames, to place a celestial object at a reference location within a captured result image according to an embodiment.

Referring to FIG. 9, in an embodiment, a first captured image frame 1, a second captured image frame 2, a third captured image frame 3, a fourth captured image frame 4, and a fifth captured image frame 5 may be arranged to superimpose, such that the celestial object image in the third captured image frame 3 which is the reference frame and each celestial object image in the other captured image frames 1, 2, 4, and 5 are overlaid.

According to an embodiment, as the first captured image frame 1, the second captured image frame 2, the third captured image frame 3, the fourth captured image frame 4, and the fifth captured image frame 5 are superimposed, the captured image frames 1, 2, 3, 4, and 5 may overlap most in the center portion including the celestial object in the third image frame 3. Thus, deterioration of the center portion including the celestial object in the captured result image may be reduced.

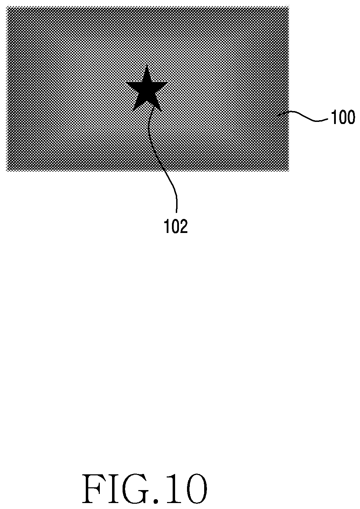

FIG. 10 is a diagram illustrating a captured result image representing a celestial object at a reference location according to an embodiment.

Referring to FIG. 10, in an embodiment, an image of a celestial object 102 may be located at the reference location of a captured result image 100. Referring to FIG. 9, as the first captured image frame 1, the second captured image frame 2, the third captured image frame 3, the fourth captured image frame 4, and the fifth captured image frame 5 are superimposed, the captured image frames 1, 2, 3, 4, and 5 may overlap most in the center portion including the celestial object in the third image frame 3. Hence, deterioration of the center portion including the celestial object image 102 in the captured result image 100 of FIG. 10 may occur less than deterioration of an edge portion of the captured result image 100.

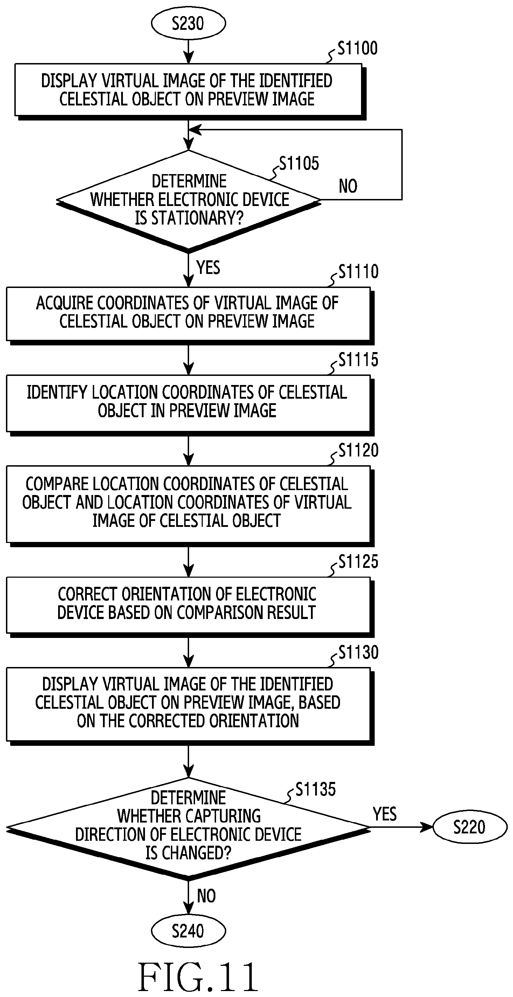

FIG. 11 is a flowchart of a method for an electronic device to correct an orientation of the electronic device and to display a virtual image of a celestial object on a preview image based on the corrected orientation according to an embodiment. Operations of FIG. 11 may be executed after operation S230 of FIG. 2, but are not limited thereto.

In the following embodiments, operations may be performed sequentially, but is not necessarily performed in sequence. For example, the order of the operations may be changed, and at least two operations may be performed in parallel.

According to an embodiment, it may be understood that operations S1100 through S1135 are performed at the processor (e.g., the processor 10020 of FIG. 14) of the electronic device (e.g., the electronic device 1000 of FIG. 1, the electronic device 10001 of FIG. 14).

According to an embodiment, the virtual image of the celestial object on the preview image may be a virtual image displayed to indicate the location of the actual celestial object on the preview image. The virtual image of the celestial object may be displayed by overlapping on the preview image separately from the actual celestial object. The virtual image of the celestial object may be generated based on celestial information of the actual celestial object, and may be virtually created to allow the user who captures the actual celestial object to identify the current location of the actual celestial object on the preview image.

According to an embodiment, the electronic device 1000 may display the virtual image of the identified celestial object on the preview image in operation S1100. The electronic device 1000 may obtain the information related to the celestial object captured by the electronic device 1000 from the celestial object DB, based on the current time at which the celestial object is captured, the location of the electronic device 1000 and the capturing direction of the electronic device 1000. The information related to the celestial object may include, for example, identification information of the celestial object, and information related to azimuth and altitude of the celestial object. For example, the identification information of the celestial object may include information related to the name of the celestial object, the shape of the celestial object, the size of the celestial object, and the color of the celestial object.

According to an embodiment, using the information related to the celestial object obtained from the celestial object DB, the electronic device 1000 may generate the virtual image of the celestial object and display the generated virtual image on the preview image. For example, the electronic device 1000 may generate the virtual image of the celestial object based on the shape, the size, and the color of the celestial object.

According to an embodiment, the electronic device 1000 may determine a location for displaying the virtual image on the preview image, based on the information related to the azimuth and the altitude of the celestial object, the orientation information of the electronic device 1000, and the angle of view of the camera of the electronic device 1000. The electronic device 1000 may display the virtual image of the celestial object at the location corresponding to the azimuth and the altitude of the celestial object on the preview image. In addition, the electronic device 1000 may display the name of the celestial object around the virtual image of the celestial object.

According to an embodiment, the electronic device 1000 may determine whether the electronic device 1000 is stationary in operation S1105. The electronic device 1000 may determine whether the electronic device 1000 is shaking based on a sensing value sensed through the IMU sensor. The electronic device 1000 may determine whether the electronic device 1000 shakes over a specific threshold. For example, the specific threshold may be determined by considering, but not limited to, whether the location of the celestial object on the preview is outside a margin of error if the electronic device 1000 captures the celestial object.

According to an embodiment, as a result of the determination in operation S1105, if determining that the electronic device 1000 is not stationary, the electronic device 1000 may repeat operation S1105.

According to an embodiment, as a result of the determination in operation S1105, if determining that the electronic device 1000 is stationary, the electronic device 1000 may perform operations S1110 through S1125 to correct the orientation of the electronic device 1000.

According to an embodiment, the electronic device 1000 may acquire coordinates of the virtual image of the celestial object on the preview image in operation S1110. As the electronic device 1000 is stationary, the electronic device 1000 may obtain information related to the celestial object captured by the electronic device 1000 from the celestial object DB, based on the current time of capturing the celestial object, the location of the electronic device 1000, and the capturing direction of the electronic device 1000. The celestial object information may include, for example, the identification information of the celestial object, and the azimuth and altitude information of the celestial object. The electronic device 1000 may calculate the coordinates of the location for displaying the virtual image of the celestial object on the preview image, based on the azimuth and altitude information of the celestial object, the orientation information of the electronic device 1000 and the angle of view of the camera of the electronic device 1000.

According to an embodiment, the electronic device 1000 may identify the location coordinates of the celestial object in the preview image in operation S1115. The electronic device 1000 may identify the celestial object image within the preview image, and identify the coordinates of the location displaying the celestial object image.

According to an embodiment, the electronic device 1000 may compare the location coordinates of the celestial object and the location coordinates of the virtual image of the celestial object in operation S1120.

According to an embodiment, the electronic device 1000 may correct the orientation of the electronic device 1000 based on the comparison result in operation S1125. The electronic device 1000 may correct the orientation of the electronic device 1000 such that the location coordinates of the celestial object and the location coordinates of the virtual image of the celestial object substantially match. The electronic device 1000 may calibrate the sensing value of the IMU sensor of the electronic device 1000, such that the location coordinates of the virtual image of the celestial object substantially matches the location coordinates of the celestial object and the location coordinates of the virtual image of the celestial object.

For example, the sensing value sensed from the geomagnetic sensor may provide three-axis information based on the magnetic north direction, and the three-axis information sensed from the acceleration sensor may provide three-axis information based on the direction of gravity. Accordingly, the geomagnetic sensor may not detect the rotation of the electronic device 1000 based on the magnetic north direction, and the acceleration sensor may not detect the rotation of the electronic device 1000 based on the direction of gravity. However, since the information based on the captured image including the celestial object includes information related to the rotation based on the magnetic north direction of the electronic device 1000 and the rotation based on the direction of gravity, the sensing value from the geolocation sensor may be expressed as an equation in which the rotation information is a variable, and the acceleration sensor may be expressed as an equation in which the rotation based on the direction of gravity is a variable. Hence, the information related to the rotation of the electronic device 1000 based on the magnetic north direction and the rotation based on the direction of gravity may be calculated from the two equations for the two variables expressed. The electronic device 1000 may predict the sensing value after the correction using the calculated rotation information. A difference between the current value used in the calculation and the predicted value is a correction value, and the electronic device 1000 may reflect the correction value in the sensing value of the geomagnetic sensor and the sensing value of the acceleration sensor.

According to an embodiment, the electronic device 1000 may display the virtual image of the identified celestial object on the preview image, based on the corrected orientation in operation S1130. The electronic device 1000 may correct the coordinates for displaying the virtual image of the celestial object, and display the virtual image of the celestial object at the location corresponding to the corrected coordinates.

If the sensing value is corrected frequently, it is difficult to provide the virtual image of the celestial object in real time while capturing the celestial object, but the virtual image of the celestial object may be provided more effectively to the user by correcting the orientation of the electronic device 1000 only if the electronic device 1000 is stationary.

According to an embodiment, the electronic device 1000 may determine whether the capturing direction of the electronic device 1000 is changed in operation S1135. The electronic device 1000 may determine whether the capturing direction of the electronic device 1000 is changed over a specific threshold. For example, if a difference between the camera facing direction and the camera facing direction of the previous correction is greater than a specific angle (e.g., about 20 through about 30 degrees), the electronic device 1000 may determine that the capturing direction is changed. For example, if a preview image before the capturing direction of the electronic device 1000 is changed and a preview image after the capturing direction of the electronic device 1000 is changed do not overlap, the electronic device 1000 may determine that the capturing direction of the electronic device 1000 is changed.

According to an embodiment, as a result of the determination in operation S1135, if determining the capturing direction change of the electronic device 1000, the electronic device 1000 may execute operation S220.

According to an embodiment, as a result of the determination in operation S1135, if determining no capturing direction change of the electronic device 1000, the electronic device 1000 may determine operation S240.

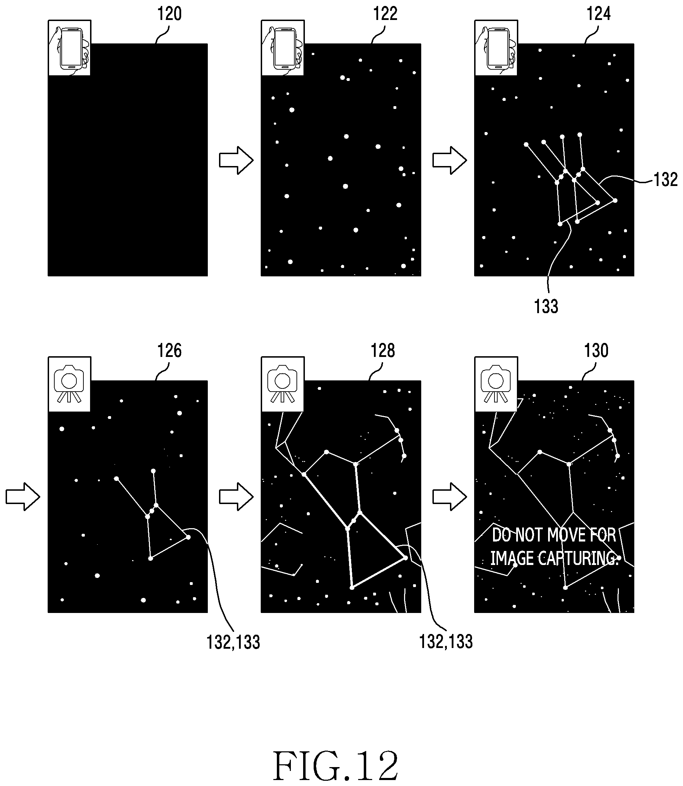

FIG. 12 is a diagram illustrating preview images displayed on a screen of an electronic device to capture an image of a celestial object according to an embodiment.

Referring to FIG. 12, in an embodiment, if the brightness of the celestial object is low, the celestial object image on a preview image 120 displayed on the screen of the electronic device 1000 which captures the celestial object may not be identified by the user.

Next, the electronic device 1000 may display a preview image 122 including a virtual image of the celestial object captured by the electronic device 1000 on the screen of the electronic device 1000. The electronic device 1000 may obtain information related to the celestial object being captured by the electronic device 1000 from the celestial object DB, based on the location of the electronic device 1000, the current time and the orientation of the electronic device 1000. In addition, the electronic device 1000 may generate the virtual image of the celestial object based on the obtained information related to the celestial object, and display the virtual image of the celestial object on the preview image 122.

According to an embodiment, if the orientation of the electronic device 1000 is not corrected, a location of a virtual image 132 of the celestial object and a location of a celestial object image 133 may be different, within a preview image 124 including the virtual image 132 of the celestial object.

According to an embodiment, if the electronic device 1000 is stationary without shaking, the electronic device 1000 may correct the orientation of the electronic device 1000 such that the virtual image 132 of the celestial object and the celestial object image 133 substantially match. As the orientation of the electronic device 1000 is corrected, the location of the virtual image 132 of the celestial object and the location of the celestial object image 133 may substantially match on a preview image 126.

According to an embodiment, next, the electronic device 1000 may change composition for capturing the celestial object based on user manipulation, and a preview image 128 may be displayed on the screen of the electronic device 1000 as the composition changes. To allow the user to change the composition for capturing the celestial object by manipulating the capturing direction of the electronic device 1000, the electronic device 1000 may provide the user with a GUI for guiding the capturing location of the celestial object as shown in FIG. 5 and FIG. 6.

According to an embodiment, next, the electronic device 1000 may capture the celestial object based on a user input. The electronic device 1000 may capture the celestial object for a specific exposure time. While capturing the celestial object, the electronic device 1000 may display on the preview image 130 a text guiding that the celestial object is being captured.

FIG. 13 is a block diagram of an electronic device according to an embodiment.

As shown in FIG. 13, an electronic device 10001 according to some embodiment may include a processor 10020, a memory 10030, a display module 10060, a sensor module 10076, and a camera module 10080. However, all of the components shown in FIG. 13 are not essential components of the electronic device 10001. The electronic device 10001 may be implemented with more components than the components shown in FIG. 13, or the device 10001 may be implemented with fewer components than the components shown in FIG. 13.

For example, as shown in FIG. 14, the electronic device 10001 according to some embodiment may further include an input module 10050, a sound output module 10055, an audio module 10070, an interface 10077, a connection terminal 10078, a haptic module 10079, a power management module 10088, a battery 10089, a communication module 10090, a subscriber identification module 10096, and/or an antenna module 10097, besides the processor 10020, the memory 10030, the display module 10060, the sensor module 10076, and the camera module 10080.

Fig. 14 is a block diagram illustrating an electronic device 10001 in a network environment 10000 according to various embodiments. Referring to Fig. 14, the electronic device 10001 in the network environment 10000 may communicate with an electronic device 10002 via a first network 10098 (e.g., a short-range wireless communication network), or at least one of an electronic device 10004 or a server 10008 via a second network 10099 (e.g., a long-range wireless communication network). According to an embodiment, the electronic device 10001 may communicate with the electronic device 10004 via the server 10008. According to an embodiment, the electronic device 10001 may include a processor 10020, memory 10030, an input module 10050, a sound output module 10055, a display module 10060, an audio module 10070, a sensor module 10076, an interface 10077, a connecting terminal 10078, a haptic module 10079, a camera module 10080, a power management module 10088, a battery 10089, a communication module 10090, a subscriber identification module (SIM) 10096, or an antenna module 10097. In some embodiments, at least one of the components (e.g., the connecting terminal 10078) may be omitted from the electronic device 10001, or one or more other components may be added in the electronic device 10001. In some embodiments, some of the components (e.g., the sensor module 10076, the camera module 10080, or the antenna module 10097) may be implemented as a single component (e.g., the display module 10060).

The processor 10020 may execute, for example, software (e.g., a program 10040) to control at least one other component (e.g., a hardware or software component) of the electronic device 10001 coupled with the processor 10020, and may perform various data processing or computation. According to one embodiment, as at least part of the data processing or computation, the processor 10020 may store a command or data received from another component (e.g., the sensor module 10076 or the communication module 10090) in volatile memory 10032, process the command or the data stored in the volatile memory 10032, and store resulting data in non-volatile memory 10034. According to an embodiment, the processor 10020 may include a main processor 10021 (e.g., a central processing unit (CPU) or an application processor (AP)), or an auxiliary processor 10023 (e.g., a graphics processing unit (GPU), a neural processing unit (NPU), an image signal processor (ISP), a sensor hub processor, or a communication processor (CP)) that is operable independently from, or in conjunction with, the main processor 10021. For example, when the electronic device 10001 includes the main processor 10021 and the auxiliary processor 10023, the auxiliary processor 10023 may be adapted to consume less power than the main processor 10021, or to be specific to a specified function. The auxiliary processor 10023 may be implemented as separate from, or as part of the main processor 10021.

The auxiliary processor 10023 may control at least some of functions or states related to at least one component (e.g., the display module 10060, the sensor module 10076, or the communication module 10090) among the components of the electronic device 10001, instead of the main processor 10021 while the main processor 10021 is in an inactive (e.g., sleep) state, or together with the main processor 10021 while the main processor 10021 is in an active state (e.g., executing an application). According to an embodiment, the auxiliary processor 10023 (e.g., an image signal processor or a communication processor) may be implemented as part of another component (e.g., the camera module 10080 or the communication module 10090) functionally related to the auxiliary processor 10023. According to an embodiment, the auxiliary processor 10023 (e.g., the neural processing unit) may include a hardware structure specified for artificial intelligence model processing. An artificial intelligence model may be generated by machine learning. Such learning may be performed, e.g., by the electronic device 10001 where the artificial intelligence is performed or via a separate server (e.g., the server 10008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 10030 may store various data used by at least one component (e.g., the processor 10020 or the sensor module 10076) of the electronic device 10001. The various data may include, for example, software (e.g., the program 10040) and input data or output data for a command related thereto. The memory 10030 may include the volatile memory 10032 or the non-volatile memory 10034.

The program 10040 may be stored in the memory 10030 as software, and may include, for example, an operating system (OS) 10042, middleware 10044, or an application 10046.

The input module 10050 may receive a command or data to be used by another component (e.g., the processor 10020) of the electronic device 10001, from the outside (e.g., a user) of the electronic device 10001. The input module 10050 may include, for example, a microphone, a mouse, a keyboard, a key (e.g., a button), or a digital pen (e.g., a stylus pen).

The sound output module 10055 may output sound signals to the outside of the electronic device 10001. The sound output module 10055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 10060 may visually provide information to the outside (e.g., a user) of the electronic device 10001. The display module 10060 may include, for example, a display, a hologram device, or a projector and control circuitry to control a corresponding one of the display, hologram device, and projector. According to an embodiment, the display module 10060 may include a touch sensor adapted to detect a touch, or a pressure sensor adapted to measure the intensity of force incurred by the touch.

The audio module 10070 may convert a sound into an electrical signal and vice versa. According to an embodiment, the audio module 10070 may obtain the sound via the input module 10050, or output the sound via the sound output module 10055 or a headphone of an external electronic device (e.g., an electronic device 10002) directly (e.g., wiredly) or wirelessly coupled with the electronic device 10001.

The sensor module 10076 may detect an operational state (e.g., power or temperature) of the electronic device 10001 or an environmental state (e.g., a state of a user) external to the electronic device 10001, and then generate an electrical signal or data value corresponding to the detected state. According to an embodiment, the sensor module 10076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 10077 may support one or more specified protocols to be used for the electronic device 10001 to be coupled with the external electronic device (e.g., the electronic device 10002) directly (e.g., wiredly) or wirelessly. According to an embodiment, the interface 10077 may include, for example, a high definition multimedia interface (HDMI), a universal serial bus (USB) interface, a secure digital (SD) card interface, or an audio interface.

A connecting terminal 10078 may include a connector via which the electronic device 10001 may be physically connected with the external electronic device (e.g., the electronic device 10002). According to an embodiment, the connecting terminal 10078 may include, for example, a HDMI connector, a USB connector, a SD card connector, or an audio connector (e.g., a headphone connector).

The haptic module 10079 may convert an electrical signal into a mechanical stimulus (e.g., a vibration or a movement) or electrical stimulus which may be recognized by a user via his tactile sensation or kinesthetic sensation. According to an embodiment, the haptic module 10079 may include, for example, a motor, a piezoelectric element, or an electric stimulator.

The camera module 10080 may capture a still image or moving images. According to an embodiment, the camera module 10080 may include one or more lenses, image sensors, image signal processors, or flashes.

The power management module 10088 may manage power supplied to the electronic device 10001. According to one embodiment, the power management module 10088 may be implemented as at least part of, for example, a power management integrated circuit (PMIC).

The battery 10089 may supply power to at least one component of the electronic device 10001. According to an embodiment, the battery 10089 may include, for example, a primary cell which is not rechargeable, a secondary cell which is rechargeable, or a fuel cell.

The communication module 10090 may support establishing a direct (e.g., wired) communication channel or a wireless communication channel between the electronic device 10001 and the external electronic device (e.g., the electronic device 10002, the electronic device 10004, or the server 10008) and performing communication via the established communication channel. The communication module 10090 may include one or more communication processors that are operable independently from the processor 10020 (e.g., the application processor (AP)) and supports a direct (e.g., wired) communication or a wireless communication. According to an embodiment, the communication module 10090 may include a wireless communication module 10092 (e.g., a cellular communication module, a short-range wireless communication module, or a global navigation satellite system (GNSS) communication module) or a wired communication module 10094 (e.g., a local area network (LAN) communication module or a power line communication (PLC) module). A corresponding one of these communication modules may communicate with the external electronic device via the first network 10098 (e.g., a short-range communication network, such as Bluetooth^{™}, wireless-fidelity (Wi-Fi) direct, or infrared data association (IrDA)) or the second network 10099 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 10092 may identify and authenticate the electronic device 10001 in a communication network, such as the first network 10098 or the second network 10099, using subscriber information (e.g., international mobile subscriber identity (IMSI)) stored in the subscriber identification module 10096.

The wireless communication module 10092 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 10092 may support a high-frequency band (e.g., the millimeter wave (mmWave) band) to achieve, e.g., a high data transmission rate. The wireless communication module 10092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 10092 may support various requirements specified in the electronic device 10001, an external electronic device (e.g., the electronic device 10004), or a network system (e.g., the second network 10099). According to an embodiment, the wireless communication module 10092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 10097 may transmit or receive a signal or power to or from the outside (e.g., the external electronic device) of the electronic device 10001. According to an embodiment, the antenna module 10097 may include an antenna including a radiating element composed of a conductive material or a conductive pattern formed in or on a substrate (e.g., a printed circuit board (PCB)). According to an embodiment, the antenna module 10097 may include a plurality of antennas (e.g., array antennas). In such a case, at least one antenna appropriate for a communication scheme used in the communication network, such as the first network 10098 or the second network 10099, may be selected, for example, by the communication module 10090 (e.g., the wireless communication module 10092) from the plurality of antennas. The signal or the power may then be transmitted or received between the communication module 10090 and the external electronic device via the selected at least one antenna. According to an embodiment, another component (e.g., a radio frequency integrated circuit (RFIC)) other than the radiating element may be additionally formed as part of the antenna module 10097.

According to various embodiments, the antenna module 10097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 10001 and the external electronic device 10004 via the server 10008 coupled with the second network 10099. Each of the electronic devices 10002 or 10004 may be a device of a same type as, or a different type, from the electronic device 10001. According to an embodiment, all or some of operations to be executed at the electronic device 10001 may be executed at one or more of the external electronic devices 10002, 10004, or 10008. For example, if the electronic device 10001 should perform a function or a service automatically, or in response to a request from a user or another device, the electronic device 10001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 10001. The electronic device 10001 may provide the outcome, with or without further processing of the outcome, as at least part of a reply to the request. To that end, a cloud computing, distributed computing, mobile edge computing (MEC), or client-server computing technology may be used, for example. The electronic device 10001 may provide ultra low-latency services using, e.g., distributed computing or mobile edge computing. In another embodiment, the external electronic device 10004 may include an internet-of-things (IoT) device. The server 10008 may be an intelligent server using machine learning and/or a neural network. According to an embodiment, the external electronic device 10004 or the server 10008 may be included in the second network 10099. The electronic device 10001 may be applied to intelligent services (e.g., smart home, smart city, smart car, or healthcare) based on 5G communication technology or IoT-related technology.

According to an embodiment, the electronic device 10001 may be the electronic device 1000 of FIG. 1 through FIG. 12 . In this case, the sensor module 10076 may include an IMU sensor. The IMU sensor may include, for example, at least one of a geomagnetic sensor, an acceleration sensor or a gyro sensor. Alternatively, for example, the IMU sensor may include a geomagnetic sensor and an acceleration sensor. In addition, the memory 10030 may store a celestial object DB.

The processor 10020 of the electronic device 10001 may perform the operations of the electronic device 1000 of FIG. 1 through FIG. 12, by executing instructions stored in the memory 10030.

The electronic device 10001 may display a preview image generated through the camera. As the image capturing function of the electronic device 10001 is activated, the electronic device 10001 may capture an image of a celestial object using the camera, and display the preview image including the celestial object image on the screen of the electronic device 10001. For example, as a camera application of the electronic device 10001 is executed and the function of capturing the celestial object is activated, the electronic device 10001 may display the preview image including the celestial object image on the screen of the electronic device 10001.

The electronic device 10001 may measure a location of the electronic device 10001. As the camera application of the electronic device 10001 is executed and the function for capturing the celestial object is activated, the electronic device 10001 may obtain the location information of the electronic device 10001. For example, the electronic device 10001 may measure the location of the electronic device 10001 using a GPS sensor, and obtain latitude and longitude information of the electronic device 10001. The location of the electronic device 10001 may be used to identify the location of the celestial object captured by the electronic device 10001 from the celestial object DB, to be described.

The electronic device 10001 may measure the orientation of the electronic device 10001. As the camera application of the electronic device 10001 is executed and the function of capturing the celestial object is activated, the electronic device 10001 may obtain orientation information of the electronic device 10001. For example, the electronic device 10001 may measure the orientation of the electronic device 10001 using the IMU sensor. For example, the IMU sensor may include, but not limited to, at least one of a geomagnetic sensor, an acceleration sensor or a gyro sensor. For example, the IMU sensor may include only a geomagnetic sensor and an acceleration sensor. For example, the electronic device 10001 may acquire three-axis information based on the geomagnetic direction using the geomagnetic sensor. For example, the electronic device 10001 may acquire three-axis information based on the direction of gravity using the acceleration sensor.

The orientation of the electronic device 10001 may be used to identify the capturing direction of the electronic device 10001, and may be used to identify the location of the celestial object captured by the electronic device 10001 from the celestial object DB, which shall be described later.

The electronic device 10001 may identify a celestial object corresponding to the location and the orientation of the electronic device 10001 from the celestial object DB. The celestial object DB may store information related to celestial objects located in the capturing direction of the electronic device 10001, according to the location and the orientation of the electronic device 10001 at a specific time. For example, the celestial object DB may include, but not limited thereto, location information of the celestial object and identification information of the celestial object. For example, the location information of the celestial object may include information related to the azimuth and the altitude of the celestial object. For example, the identification information of the celestial object may include information related to the name of the celestial object, the shape of the celestial object, the size of the celestial object and the color of the celestial object.

The electronic device 10001 may identify the capturing direction in which the camera of the electronic device 10001 faces based on the orientation information of the electronic device 10001. The electronic device 10001 may identify the current time for capturing the celestial object, and identify information related to the celestial object captured by the electronic device 10001 from the celestial object DB, based on the current time, the location of the electronic device 10001 and the capturing direction of the electronic device 10001. For example, the electronic device 10001 obtain information related to right ascension, declination, an angle of view, and rotation of a portion currently faced by the camera of the electronic device 1000, based on the location information measured using the GPS sensor, the orientation information measured using the IMU sensor, and camera information. In addition, for example, the electronic device 10001 may identify information related to the celestial object captured by the electronic device 10001 from the celestial object DB using the plate solving technology.

The electronic device 10001 may identify an exposure time for capturing the celestial object. If the brightness of the celestial object is not high enough, the celestial object image on the preview image may not be identified by the user, and the electronic device 10001 may capture the celestial object for a specific exposure time such that the celestial object in the captured result image may be identified by the user. For example, the exposure time for capturing the celestial object may be preset to a default value for capturing the celestial object. Alternatively, for example, the exposure time for capturing the celestial object may be set to a specific value according to a user input as the function for capturing the celestial object is activated. Alternatively, for example, the exposure time for capturing the celestial object may be set automatically based on the brightness of the celestial object in the preview image.

Based on the exposure time, the electronic device 10001 may display on the preview image a GUI for guiding the reference location for displaying the celestial object within the captured result image of the celestial object. The electronic device 10001 may calculate a movement trajectory of the celestial object to be captured at the location of the electronic device 10001, based on the exposure time. The electronic device 10001 may calculate a movement direction and a movement distance of the celestial object during the exposure time, based on the latitude and the longitude of the location of the electronic device 10001.

The electronic device 10001 may identify the capture start location of the celestial object on the preview image and, identify the capture end location of the celestial object on the preview image, based on the capture start location and the movement trajectory of the celestial object.

The electronic device 10001 may determine a specific location between the capture start location and the capture end location on the preview image as the reference location. In addition, the electronic device 10001 may display on the preview image a GUI for guiding the user that the celestial object will be displayed at a location corresponding to the reference location on the preview image within the captured result image. For example, the capture start location and the capture end location on the preview image may be located near the boundary of the preview image, and the GUI for guiding the reference location for displaying the celestial object within the captured result image of the celestial object may be located in a center portion of the preview image.

The electronic device 10001 may capture the celestial object during the exposure time. The electronic device 10001 may acquire a plurality of captured image frames by capturing the celestial object during the exposure time. The plurality of captured image frames each may include the celestial object image. As the celestial object moves during the exposure time, each celestial object image within the plurality of captured image frames may be displayed at different locations.

The electronic device 10001 may generate the captured result image by combining the plurality of captured image frames. The electronic device 10001 may superimpose the plurality of captured frames such that the celestial object images in the plurality of captured frames are located at the reference location within the captured result image. In addition, the electronic device 10001 may generate the captured result image by combining the plurality of the superimposed captured images.

The electronic device 10001 may identify the location of the celestial object from each of the plurality of captured frames, and generate the captured result image, by arranging the plurality of captured frames such that the celestial object is located at the reference location in the captured result image.

The electronic device 10001 according to an embodiment may display a virtual image of the identified celestial object on the preview image. The electronic device 10001 may obtain information of the celestial object captured by the electronic device 10001 from the celestial object DB, based on the current time at which the celestial object is captured, the location of the electronic device 10001 and the capturing direction of the electronic device 10001. The celestial object information may include, for example, the identification information of the celestial object, and the azimuth and altitude information of the celestial object. For example, the identification information of the celestial object may include information related to the celestial object name, the celestial object shape, the celestial object size, and the celestial object color.

The electronic device 10001 may generate a virtual image of the celestial object using the celestial object information obtained from the celestial object DB, and display the generated virtual image on the preview image. For example, the electronic device 10001 may generate the virtual image of the celestial object based on the shape, the size, and the color of the celestial object.

The electronic device 10001 may determine a location for displaying the virtual image on the preview image, based on the azimuth and altitude information of the celestial object, the orientation information of the electronic device 10001, and the angle of view of the camera of the electronic device 10001. The electronic device 10001 may display the virtual image of the celestial object at the location corresponding to the azimuth and the altitude of the celestial object on the preview image. In addition, the electronic device 10001 may display the name of the celestial object around the virtual image of the celestial object.

The electronic device 10001 may determine whether the electronic device 10001 is stationary. The electronic device 10001 may determine whether the electronic device 10001 is shaking, based on the sensing value sensed through the IMU sensor. The electronic device 10001 may determine whether the electronic device 10001 is shaken over a specific threshold. For example, the specific threshold may be determined by considering whether the location of the celestial object on the preview is outside a margin of error if the electronic device 10001 captures the celestial object, but is not limited thereto.

If determining that the electronic device 10001 is not stationary, the electronic device 10001 may repeat determining whether the electronic device 10001 is stationary.

If determining that the electronic device 10001 is stationary, the electronic device 10001 may perform operations to correct the orientation of the electronic device 10001. Correcting the orientation of the electronic device 10001 may include correcting the sensing value of the IMU sensor of the electronic device 10001.

The electronic device 10001 may acquire coordinates of the virtual image of the celestial object on the preview image. As the electronic device 10001 is stationary, the electronic device 10001 may obtain information of the celestial object captured by the electronic device 10001 from the celestial object DB, based on the current time of capturing the celestial object, the location of the electronic device 10001 and the capturing direction of the electronic device 10001. The celestial object information may include, for example, the identification information of the celestial object, and the azimuth and altitude information of the celestial object. The electronic device 10001 may calculate the coordinates of the location for displaying the virtual image of the celestial object on the preview image, based on the azimuth and altitude information of the celestial object, the orientation information of the electronic device 10001 and the angle of view of the camera of the electronic device 10001.

The electronic device 10001 may identify location coordinates of the celestial object in the preview image. The electronic device 10001 may identify the celestial object image within the preview image, and identify the coordinates of the location displaying the celestial object image.

The electronic device 10001 may compare the location coordinates of the celestial object and the location coordinates of the virtual image of the celestial object.

The electronic device 10001 may correct the orientation of the electronic device 10001 based on the comparison result. The electronic device 10001 may correct the orientation of the electronic device 10001 such that the location coordinates of the celestial object match the location coordinates of the virtual image of the celestial object. The electronic device 10001 may calibrate the sensing value of the IMU sensor of the electronic device 10001, such that the location coordinates of the virtual image of the celestial object match the location coordinates of the celestial object and the location coordinates of the virtual image of the celestial object.

For example, the sensing value sensed from the geomagnetic sensor may provide three-axis information based on the magnetic north direction, and the three-axis information sensed from the acceleration sensor may provide three-axis information based on the direction of gravity. Accordingly, the geomagnetic sensor may not detect the rotation of the electronic device 10001 based on the magnetic north direction, and the acceleration sensor may not detect the rotation of the electronic device 10001 based on the direction of gravity. However, since the information based on the captured image including the celestial object includes information related to the rotation based on the magnetic north direction of the electronic device 10001 and the rotation based on the direction of gravity, the sensing value from the geolocation sensor may be expressed as an equation in which rotation information is a variable, and the acceleration sensor may be expressed in an equation in which the rotation based on the direction of gravity is a variable. Hence, the information related to the rotation of the electronic device 10001 based on the magnetic north direction and the rotation based on the direction of gravity may be calculated from the two equations for the two variables expressed. The electronic device 10001 may predict the sensing value after the correction using the calculated rotation information. A difference between the current value used in the calculation and the predicted value is a correction value, and the electronic device 10001 may reflect the correction value in the sensing value of the geomagnetic sensor and the sensing value of the acceleration sensor.

The electronic device 10001 may display the virtual image of the identified celestial object, on the preview image, based on the corrected orientation.

If the sensing value is corrected frequently, it is difficult to provide the virtual image of the celestial object in real time while capturing the celestial object, but the virtual image of the celestial object may be provided more effectively to the user by correcting the orientation of the electronic device 10001 only if the electronic device 10001 is stationary.

The electronic device 10001 may determine whether the capturing direction of the electronic device 10001 is changed. The electronic device 10001 may determine whether the capturing direction of the electronic device 10001 is changed over a specific threshold. For example, if a difference between the camera facing direction and the camera facing direction of the previous correction is greater than a specific angle (e.g., about 20 through about 30 degrees), the electronic device 10001 may determine that the capturing direction of the electronic device 10001 is changed. For example, if a preview image before the capturing direction of the electronic device 10001 is changed and a preview image after the capturing direction of the electronic device 10001 is changed do not overlap, the electronic device 10001 may determine that the capturing direction of the electronic device 10001 is changed.

If determining the capturing direction change of the electronic device 10001, the electronic device 10001 may display the virtual image of the celestial object on the preview image, and perform correcting the orientation of the electronic device 10001.

If determining that the capturing direction of the electronic device 10001 is not changed, the electronic device 10001 may perform guiding the image capturing of the celestial object.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element. As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 10040) including one or more instructions that are stored in a storage medium (e.g., internal memory 10036 or external memory 10038) that is readable by a machine (e.g., the electronic device 10001). For example, a processor (e.g., the processor 10020) of the machine (e.g., the electronic device 10001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method an electronic device to capture an image of a celestial object, comprising:
displaying a preview image generated through a camera of the electronic device;
measuring a location of the electronic device using a global positioning system (GPS) sensor of the electronic device;
measuring an orientation of the electronic device, using an inertial measurement unit (IMU) sensor of the electronic device;
identifying a celestial object corresponding to a capturing direction of the camera of the electronic device, based on the measured location and the measured orientation;
identifying an exposure time of the camera which is set to capture the celestial object;
based on the exposure time, displaying a graphical user interface (GUI) on the preview image to guide a reference location for displaying the celestial object within a captured result image of the celestial object;
receiving a user input for capturing the celestial object; and
upon receiving the user input, capturing the celestial object during the exposure time.

2. The method of claim 1, further comprising:
acquiring a plurality of captured image frames, by capturing the celestial object during the exposure time; and
generating the captured result image, by combining the plurality of captured image frames.

3. The method of claim 2,
wherein, as the celestial object moves during the exposure time, locations of the celestial object in the plurality of captured image frames are different from each other, and
wherein generating the captured result image comprises combining the plurality of captured image frames, such that celestial objects in the plurality of captured image frames superimpose, at the reference location for displaying the celestial object in the captured result image.

4. The method of claim 3, wherein the reference location for displaying the celestial object in the captured result image is determined based on the exposure time, a capture start location of the celestial object and a capture end location of the celestial object, to prevent deterioration around the location of the celestial object in the captured result image.

5. The method of claim 1, further comprising:
determining that the electronic device is stationary,
wherein as the electronic device is stationary:
identifying coordinates for displaying a virtual image of the celestial object in the preview image,
comparing location coordinates of the celestial object in the preview image with the coordinates for displaying the virtual image, and
correcting a sensing value of the IMU sensor of the electronic device, based on the comparison result.

6. The method of claim 5, wherein determining that the electronic device is stationary comprises determining whether shaking of the electronic device falls within a preset threshold range, using the IMU sensor.

7. The method of claim 5, further comprising:
correcting the coordinates for displaying the virtual image, based on correcting the sensing value of the IMU sensor of the electronic device; and
displaying the virtual image of the celestial object at a location corresponding to the corrected coordinates on the preview image.

8. The method of claim 5, further comprising:
determining that the capture direction of the electronic device is changed; and
as the capture direction of the electronic device changes, recorrecting the sensing value of the IMU sensor of the electronic device and the corrected coordinates.

9. The method of claim 8, wherein determining that the capture direction is changed comprises determining whether the capture direction of the electronic device deviates from a preset threshold.

10. The method of claim 1, wherein identifying the celestial object is identifying the celestial object corresponding to the capture direction of the camera of the electronic device, from a database (DB) which stores celestial object information corresponding to the measured location and the measured orientation.

11. An electronic device for capturing an image of a celestial object, the electronic device comprising:
a camera for capturing an image of the celestial object;
a global positioning system (GPS) sensor for measuring a location of the electronic device;
an inertial measurement unit (IMU) sensor for measuring an orientation of the electronic device;
a display;
memory storing one or more instructions; and
a processor for executing the one or more instructions,
wherein the processor executes the one or more instructions, to
display a preview image generated through the camera on the display,
measure the location of the electronic device using the GPS sensor,
measure the orientation of the electronic device, using the IMU sensor,
based on the measured location and the measured orientation, identify a celestial object corresponding to a capture direction of the camera,
identify an exposure time of the camera which is set to capture the celestial object,
based on the exposure time, display a GUI on the preview image to guide a reference location for displaying the celestial object in a captured result image of the celestial object,
receive a user input for capturing the celestial object, and
upon receiving the user input, capture the celestial object during the exposure time.

12. The electronic device of claim 11, wherein the processor executes the one or more instructions to,
obtain a plurality of captured image frames, by capturing the celestial object during the exposure time, and
generate the captured result image, by combining the plurality of captured image frames.

13. The electronic device of claim 12, as the celestial object moves during the exposure time, locations of the celestial object in the plurality of captured image frames are different from each other, and
the processor executes the one or more instructions to combine the plurality of captured image frames, such that celestial objects in the plurality of captured image frames superimpose, at the reference location for displaying the celestial object in the captured result image.

14. The electronic device of claim 13, wherein the reference location for displaying the celestial object in the captured result image is determined based on the exposure time, a capture start location of the celestial object and a capture end location of the celestial object, to prevent deterioration around the location of the celestial object in the captured result image.

15. The electronic device of claim 11, wherein the processor executes the one or more instructions to:
determine that the electronic device is stationary;
as the electronic device is stationary, identify coordinates for displaying a virtual image of the celestial object in the preview image;
compare location coordinates of the celestial object in the preview image with the coordinates for displaying the virtual image; and
correct a sensing value of the IMU sensor of the electronic device, based on the comparison result.
